# EUROPEAN PATENT SPECIFICATION

(11) **EP 1 444 071 B1**
(45) Date of publication and mention of the grant of the patent: **05.03.2008**
(21) Application number: 02789053.2
(22) Date of filing: 11.11.2002
(51) Int. Cl.: B25J 9/16, G05B 19/18

(54) **A ROBOT SYSTEM AND A METHOD AND A SOFTWARE PRODUCT FOR THE ROBOT SYSTEM**
ROBOTERSYSTEM UND VERFAHREN UND SOFTWARE FÜR DAS ROBOTERSYSTEM
SYSTEME ROBOT, PROCEDE ET LOGICIEL POUR PRODUIRE LEDIT SYSTEME ROBOT

(30) Priority: 12.11.2001 SE 0103735
(43) Date of publication of application: 11.08.2004
(73) Proprietor: ABB AB, 721 83 Västerås (SE)
(72) Inventor: REYIER, Ingemar, S-723 55 Västeras (SE); ERIKSSON, Peter, S-723 41 Västeras (SE)
(74) Representative: Reyier, Ann-Mari
(86) International application number: PCT/SE2002/002053
(87) International publication number: WO 2003/057428

(56) References cited:
- EP-A2- 0 075 325
- US-A- 4 204 253
- US-A- 4 517 652
- PATENT ABSTRACTS OF JAPAN & JP 11 110 027 A (MATSUSHITA ELECTRIC IND CO LTD) 23 April 1999
- PATENT ABSTRACTS OF JAPAN & JP 08 263 125 A (FANUC LTD) 11 October 1996

## Description

### TECHNICAL FIELD

The present invention relates to a method for editing a computer program in an industrial robot from an external computer that is connected to the control system of the robot. The invention also relates to a computer program product comprising software code portions that enable a computer to carry out the steps of the method according to the invention.

Further, the present invention relates to a robot system comprising at least one industrial robot with a control system including a main memory with at least one stored robot program and a computer connected to the control system of the robot, whereby the robot system is adapted such that the robot program is editable from the external computer. The invention also relates to use of a robot system for a painting application.

### BACKGROUND ART

A robot program is a computer program that controls the movements of the robot when it is to carry out a certain application. Usually, the robot program is written in a special program language intended for robot programming. From EP 0 075 325 it is known to carry out editing, test running and error detection of a robot program for an industrial robot with a portable programming unit that is connected directly to the control system of the robot. Because the programming unit is connected directly to the control system, it is possible, during testing and error detection of the robot program, to view and follow what happens in the control system when the program is run. It is also possible to stop the program, change in a program line and then to run the program further from the point where it was stopped without having to re-run the program from the beginning.

One disadvantage of editing and testing the robot program with the aid of the programming unit is that the operator cannot simultaneously edit the robot program for separate robots. In certain applications, where a number of robots are placed together in a robot cell, it is desirable for an operator to edit and test the robot program of the robots from one and the same location. Other disadvantages of the programming unit is that it has a small screen, no keyboard and that free text editing is difficult to achieve with a retained environment for a compiled robot program. These disadvantages entail drawbacks for an operator who has to make considerable changes in the program.

It is further known to edit and test-run a robot program from an external computer, preferably an ordinary personal computer, which via a network is connected to the control system of one or more robots. Since the communication between the external computer and the control system does not take place directly but via some form of communication link, it is important that the amount of transferred data per unit of time be kept down so as to prevent the communication link from becoming overloaded. When the robot program is to be edited from the external computer, a copy of the program is therefore fetched from the secondary memory in the control system of the robot to the computer and the editing is made on the copy in the computer. When the program has been edited, it is loaded back into the secondary memory in the control system of the robot. Before the program can be run, it is prepared, for example by being compiled and linked and checked with respect to syntax and semantics.

Some advantages achieved with editing the robot program from an external computer are the access to a larger display screen, a better keyboard and that it is possible to use free text editing instead of a restricted editing, such as, for example, "object editing". Another advantage is that it is still possible to edit the program if a control system failure occurs and that several robots can be edited from the same unit. In addition, the operator can be seated at a distance from the robots and carry out the editing. A disadvantage of the above-described method of editing a robot program from an external computer is that when the program is to be test-run after a change, the entire program must be started from beginning again. This also implies that, before the program can be started, the physical environment of the robot must be restored to its initial state, for example by jogging the robot to its starting position. This method is time-consuming and awkward, especially if the program must be changed several times during the testing.

Besides the programming unit, other external computers may be connected via a network to the control system. A problem that arises when the robot is edited from the external computer with the method described above is that, until the copy has been loaded back again into the control system, it is only possible to see what changes have been made to the program on the computer where the program is edited. If it is a question of many and considerable changes, it may be long before these changes are visible in the control system. It is therefore desirable that changes carried out in the robot program can immediately be seen by other units that are connected to the control system. An additional disadvantage of the above-mentioned method is that the operator cannot see what happens in the control system when the program is run during testing and error detection of the robot program.

To make it simpler for an operator to edit and test-run a robot program, it is known to make a larger programming unit to make it look more like a personal computer with respect to the size of the display screen and the programming tools. However, there are applications where it is desirable to be able to edit and test-run robot programs from a larger distance than what is permitted by the programming unit and, in addition, to be able to edit and test-run several robots from the same computer. An example of such an application is painting operations carried out by industrial robots. In certain applications, it is therefore desirable to be able to handle the robot from an external computer.

It is thus desirable to find a method for editing a robot program with an external computer that retains the advantages of the external computer and, in addition, exhibits the above-mentioned advantages of the programming unit.

### SUMMARY OF THE INVENTION

The object of the present invention is to provide a method that enables on-line handling of one or more industrial robots from an external computer that is connected to the control system of the robot or the robots and that does not exhibit the disadvantages mentioned above. Handling of an industrial robot primarily means editing a robot program, but handling also means testing and error detection of the robot program. In particular, a method is aimed at where it is possible to carry out changes in the robot program without the environment of the robot being changed and without the communication between the computer and the control system being loaded too much.

This objects is achieved with a method comprising the steps of obtaining a reference to that part of the robot program that is to be edited, creating a local reflection of the robot program in the external computer by fetching a copy of the robot program according to the reference, editing the robot program in the external computer, sending an order to the control system regarding a change to be carried out in the robot program in dependence on the mentioned editing, carrying out the mentioned editing directly in the main memory of the control system and updating the reflection. Due to the fact that all the changes are carried out directly in the main memory of the control system and not only in a copy on the external computer, changes will become available for other units that are connected to the control system. An additional advantage of carrying out changes directly in the program in the main memory is that the program will only be available at one single location, that is, in the control system, which means that the program need not be stopped during editing and a change makes itself felt as soon as it has been carried out.

The main memory stores programs in the form of processed program code. Processed program code means, for example, code that is compiled and linked. Because the change is carried out directly in the processed program code, it is sufficient with partial compilation and incremental linking. Incremental linking means that only those parts of the program that are directly or indirectly concerned by the change are linked. Thus, the whole program need not be compiled and linked again and the program need not be started from the beginning after a change has occurred. It will thus be possible to stop the program, carry out a change in the program and restart the program from the point where it was stopped with an unchanged environment. An unchanged environment means, for example, the configuration of the robot, variables in the program, and I/O settings.

A robot program is usually very large and may consist of many thousand program lines. Invoking the whole robot program requires a great deal from the communication between the computer and the control system. By invoking and showing only that part of the program that is to be edited, it will not be necessary to invoke the whole program. The reference to that part of the program that is to be edited is either already known or may be found out by making queries.

In the external computer, a local reflection of that part of the program that is to be edited is created, and upon the above-mentioned change of the program part, the change is carried out both in the reflection and in the main memory. Upon each change of the robot program in the main memory, also the reflection is changed such that it always constitutes an exact copy of the robot program in the main memory. Because the editing of the robot program takes place in a local reflection of the program on the external computer and only the changes are sent to the control system, the need of network communication between the computer and the control system is reduced. If, for example, the user moves up and down in the program part to view different portions of the program part, a program code fetched from the reflection is shown instead of from the control system.

According to a further preferred embodiment of the invention, information about symbols and data objects is fetched for the reflection. Preferably, the reflection is also provided with program logic to create and interpret semantic information about the robot program. In this way, the network communication between the computer and the control system may be further reduced in that it is sufficient to turn to the local reflection to obtain semantic information about that part of the program that is to be edited and its environment. Such information is necessary to be able to achieve certain functions to facilitate the editing for a user, such as colouring and recognition and completion.

According to another preferred embodiment of the invention, the position of the program counter is retrieved in the robot program, whereupon the position of the program counter is shown in the reflection. Since the user is given a possibility of following where the program pointer is in the program, he will have the impression that he has a direct insight into what happens in the control system. In this way, it will be simpler to carry out testing and error detection of a robot program from the external computer.

According to a further preferred embodiment of the invention, a description of how the change is to be carried out is sent to the control system. In this way, the control system is able to rapidly and simply carry out the change and the control system need not waste performance on finding out how the changes are to be carried out. Instead, the performance of the control system may be applied to other tasks.

According to yet another preferred embodiment of the invention, the above-mentioned description of the change comprises the difference between the existing program code and the edited program code. Because of this information, it will be easier for the control system to carry out the requested change with retained environment. Since only the changes are sent to the control system instead of the whole body of text, also the network communication between the computer and the control system is reduced.

According to still another preferred embodiment of the invention, the robot program is divided into a number of different program modules and an overview of these program modules is shown on the external computer, whereby the program module to be edited is marked in the overview. Preferably, at least part of the marked program module is shown on the external computer, whereby a user is given a possibility of editing the text shown. To facilitate the editing for the user, an overview is shown of those program modules that are possible to edit and the user chooses which module to be edited by marking this module. When the module has been marked, at least part of the module is shown on the computer screen. The user can then move up and down in the program module and edit different parts of the module. During the reflection mentioned above, it is preferably the program module to be edited that is reflected.

An additional object of the invention is to provide a robot system comprising an industrial robot and a computer connected to the control system of the robot that make it possible for a user to carry out editing, testing and error detection of a robot program that is run on the control system of the robot. This object is achieved with the robot system described in the introduction, which is characterized in that the robot system comprises means for obtaining a reference to that part of the robot program that is to be edited and, according to the invention, for fetching a copy of the mentioned part of the robot program from the main memory to the external computer, as well as means for generating and sending an order to the control system for carrying out a change, in dependence on the editing mentioned, directly in the mentioned part of the robot program in the main memory of the control system.

A robot system according to the invention may advantageously be used for a painting application.

The invention is preferably implemented as one or more computer programs that comprise a number of program instructions that carry out the steps of the method. These computer programs may either be run on a processor in the external computer or on a processor in the control system of the robot.

Yet another object of the invention is to provide a computer program product that enables on-line handling of one or more industrial robots from an external computer. This object is achieved with a computer program product that may be loaded directly into the internal memory of a computer, which memory comprises software code portions, to make it possible for the computer to carry out the method as described above.

Still another object of the invention is to provide a computer-readable medium comprising a computer program comprising instructions for influencing a processor to carry out the method as described above.

### BRIEF DESCRIPTION OF THE DRAWING

The present invention will now be described with the aid of various embodiments described as examples, and with reference to the accompanying drawings.
- Figure 1: shows an external computer connected to an industrial robot.
- Figure 2: illustrates how an industrial robot is handled from an external computer according to one embodiment of the invention.

### DESCRIPTION OF THE PREFERRED EMBODIMENT

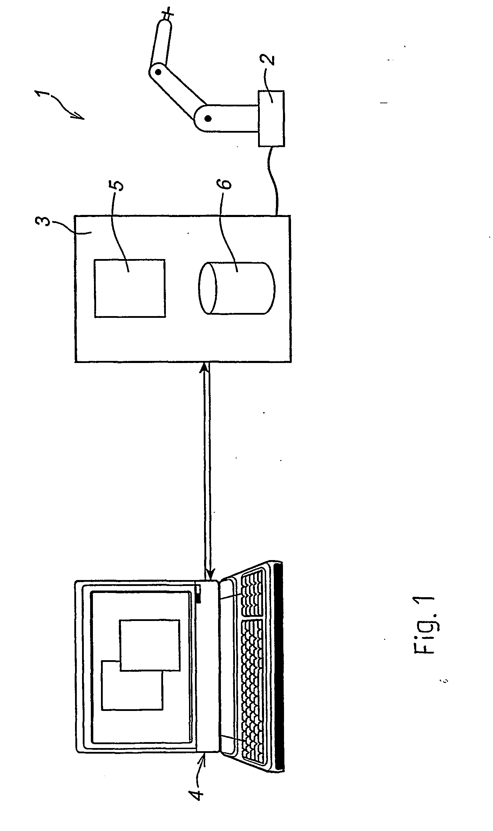

Figure 1 shows an industrial robot 1, comprising a manipulator 2, a control system 3 and an external computer 4, which is connected to the control system of the robot via a network. The external computer comprises a screen and a keyboard. The network may comprise several industrial robots and computers. The external computer is, for example, an ordinary personal computer. The control system of the robot includes both a secondary memory 6, where files with program code are stored, and a main memory 5, where processed program code is stored. In the following embodiments, processed program code means such code as is compiled and linked.

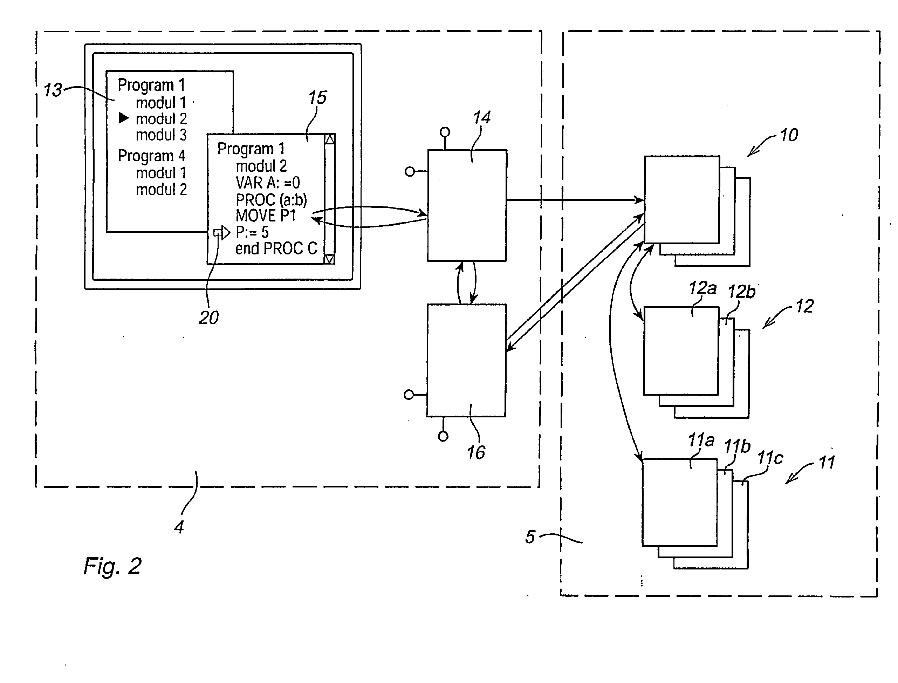

Figure 2 shows part of the main memory 5 of the control system. The main memory includes those programs 10 which constitute the actual control system, that is, those programs which control data and file handling in the robot. The programs 10 comprise, for example, a compiler and a linkage editor for robot program code. Further, the main memory includes compiled and linked robot programs 11 as well as tables and symbols 12 that have been generated during the compilation of the robot programs. The primary stores both the compiled and the linked code and its text presentation. The symbols are, for example, variables, constants, procedures and functions. A robot program is divided into a number of program modules 11a-11c, each of which comprises a number of program lines with robot code. It is the program 10 of the control system that handles the program modules and the symbol tables.

Figure 2 also shows part of the external computer 4. The computer has an explorer 13 which in a clear way, in the form of a hierarchy, shows relevant robot programs, that is, the robot programs that are stored in the main memory of the control system, and their program modules. A user who wants to make a change in a certain program module 11b in a robot program may move up and down in the explorer 13 until he finds the desired program module 11b. To be able to see the program code for the desired module, the user clicks the desired module 11b in the explorer 13. The explorer 13 then has a reference ready for the module 11b. When the user clicks a module, a handling object 14 is created which is connected to the desired module 11b with the aid of the reference and a window 15 is opened where the program lines in the module 11b are to be shown.

The handling object 14 in turn creates an auxiliary object 16 that comprises program logic to be able to semantically interpret a robot program. The program logic includes, for example, a compiler and a linkage editor. In this embodiment, the program logic also includes semantic information to be able to generate a colouring of different types in the program code that is shown to the user. The program logic may, for example, be a copy of those parts of the control system of the robot that include such program logic. Several handling objects may use the same auxiliary object. If an auxiliary object already exists, it is sufficient that the handling object fetches the existing auxiliary object. In this embodiment, the handling object 14 and the auxiliary object 16 consists of COM objects.

With the aid of the program 10 of the control system, the auxiliary object 16 fetches from the main memory the contents of the module 11b, that is, both the compiled and the linked program code and the text representation of the program, and the tables and symbols 12a, 12b that belong to the module and its environment. In this way, a reflection is created in the external computer of the module 11b and the symbol tables 12a, 12b in the main memory of the control system. The auxiliary object 16 comprises this reflection. The program module usually includes some hundred program lines, but only some ten program lines can be accommodated in the window 15. The handling object fetches as many program lines as can possibly be shown in the window 15 from the module in the auxiliary object 16 and shows these program lines in the window. The handling object also fetches the semantic information that is needed to make a colouring of the shown program lines and carries out the colouring. If the user chooses to see a new part of the program module 11b, for example by scrolling the text, the handling object fetches those new program lines and information as to how these are to be coloured from the auxiliary object 16. The handling object then shows the new program lines in the window 15.

When the user chooses to change in a program line, one or more alternatives for possible changes are shown. It is the auxiliary object 16 that obtains these alternatives while using the tables and symbols 12a-12b that belong to the module and its environment. Which alternatives are shown depends on the semantic environment where the change is to be performed. If, for example, a program line is to be changed in a conditional clause, where only data objects and functions of a certain type are allowed, only data objects and functions of this type will be suggested. The user may choose between taking any of the suggested alternatives or writing in something completely new. Each press of the button generates a change in the reflection.

When the program line is changed and the user presses end of line, the handling object 14 creates a change description with information as to where in the module the change is to be made and how the change is to be made. The change description includes a detailed description of the difference between the existing program code and the new edited program code. A change description that says that in program line 25, position 8, the figure 5 is to be changed to a figure 6 may have the following appearance:
25:8 /5 -->6

The handling object 14 sends the change description to the control system that carries out the change directly in the main memory in the compiled and linked program code for the module 11b. Because of the detailed change description, the change may be carried out rapidly and simply direct in the processed program code, and only a partial compilation and an incremental linking are needed. Incremental linking means that only those parts of the program that are directly or indirectly concerned by the change are linked. Thus, it is not necessary to compile and link the whole program again. The control system attends to the text representation of the module also being updated. When the change has been made, the control system sends a change order to the auxiliary object that updates the reflection of the module 11b. The reflection is always updated simultaneously with the original being updated. If a plurality of computers are connected to the control system, a change order is sent to all auxiliary objects in the connected computers, which update their copies of the module 11b. If a plurality of computers are connected to the control system, it is an advantage for the control system to send a change order to all the computers at the same time.

When the robot program is run, a program counter in the main memory indicates the program instruction that is currently being executed. When testing and/or error detection are to be carried out in a robot program, it is an advantage if it is possible to see which instruction is currently being executed, thus making it possible to follow what happens in the program. To this end, a cursor 20 is shown in the window 15, which cursor marks the position of the program counter in the program code. The handling object 14 fetches information from the control system about the position of the program counter and forwards the position information to the window 15 that shows the cursor in this position.

The invention is not limited to the embodiments shown but may be varied and modified within the scope of the following claims. A change order to the control system can be generated on other occasions than at the end of a line, for example each time the user presses a key on the keyboard. In an alternative embodiment, the user may himself choose when a change order is to be generated by clicking on a special "safe" button that generates a change order when it is activated.

In an alternative embodiment of the invention, the handling object sends the change order at the same time to both the control system and the auxiliary object.

Instead of dividing the functions of fetching the robot program and generating and sending a change order to the control system on two different objects (the handling object and the auxiliary object), these functions may, of course, be carried out by one and the same object.

In an alternative embodiment, the change order that is sent to the main memory includes edited program code and the difference between the existing and the edited program code is generated in the robot control system. Thereafter, a change description is generated on the basis of the differences obtained.

## Claims

1. A method for editing a computer program in an industrial robot comprising at least one industrial robot with a control system (3) including a main memory (6) with at least one stored robot program, wherein the robot program is edited from an external computer that is connected to the control system, **characterized in that** the method comprises:
- obtaining a reference to that part of the robot program that is to be edited,
- creating a local reflection of said program part in the external computer by fetching a copy of the program part according to the reference,
- editing the program part in the external computer,
- sending an order to the control system for carrying out a change in the robot program in dependence on said editing, and
- carrying out said change directly in the main memory of the control system and updating the reflection.

2. A method according to claim 1, wherein information about symbols and data objects are fetched to the reflection.

3. A method according to claim 1 or 2, wherein the reflection is provided with program logic to create and interpret semantic information about the robot program.

4. A method according to any of claims 1-3, wherein the position of the program counter in the robot program is fetched, whereupon the position of the program counter is shown in the reflection.

5. A method according to any of claims 1-4, wherein a description of how to carry out the change is sent to the control system.

6. A method according to claim 5, wherein said change description comprises the difference between existing program code and edited program code.

7. A method according to any of claims 1-6, wherein said robot program is divided into a number of different program modules, an overview of said program modules being shown on the external computer, wherein the program module to be edited is marked in the overview and said reference is obtained.

8. A method according to claim 7, wherein at least a part of the marked program module is shown on the external computer, whereby a user is given a possibility of editing the shown text.

9. A method according to any of the preceding claims, wherein the robot system comprises two robots that are connected to the external computer via a network.

10. A robot system comprising an industrial robot (1) with a control system (3), including a main memory (5) with at least one robot program and a processor, and an external computer (4) connected to the control system, whereby the robot system is arranged such that the robot program is editable in the external computer, **characterized in that** the robot system comprises means (16) for obtaining a reference to that part of the robot program that is to be edited and for creating a local reflection in the external computer of said part, means (14) for generating and sending an order to the control system regarding carrying out a change directly in said part of the robot program in the main memory of the control system, and means for updating the reflection.

11. A robot system according to claim 10, **characterized in that** said order generating means (14) is adapted to generate a description of how the change is to be carried out and that the change order comprises the generated description.

12. A robot system according to claim 11, **characterized in that** said change description comprises the difference between the existing program code and the edited program code.

13. A robot system according to any of claims 10-12, **characterized in that** it comprises means for finding out the position of the program counter in the robot program and for showing the program counter (20) in the reflection.

14. A robot system according to any of claims 10-13, **characterized in that** said local reflection comprises information about symbols and data objects.

15. A robot system according to claim 14, **characterized in that** the reflection comprises program logic for creating and interpreting semantic information about the robot program.

16. A robot system according to any of claims 10-15, **characterized in that** said robot program is divided into a number of different program modules and that said computer comprises an explorer that shows an overview of said program modules and has means for marking, in the overview, the program module that is to be edited.

17. A robot system according to any of claims 11-19, **characterized in that** it comprises two robots that are connected to the external computer via a network.

18. A computer program product that may be loaded directly into the internal memory of a computer, comprising software code parts to enable the robot to carry out the method according to any of claims 1-10.

19. A computer program product according to claim 18, provided at least partly over a network such as the Internet.

20. A computer-readable medium comprising a computer program comprising instructions for influencing a processor to carry out the method according to any of claims 1-10.

21. Use of a robot system according to any of claims 10-17 for a painting application.

## Patentansprüche

1. Verfahren zum Bearbeiten eines Computerprogramms in einem Industrieroboter, aufweisend mindestens einen Industrieroboter mit einem Steuerungssystem (3), einschließend einem Hauptspeicher (6) mit mindestens einem gespeicherten Roboterprogramm, wobei das Roboterprogramm von einem externen Computer aus bearbeitet wird, der mit dem Steuerungssystem verbunden ist, **dadurch gekennzeichnet, dass** das Verfahren aufweist:
- Erhalten einer Referenz zu dem zu bearbeitenden Teil des Roboterprogramms,
- Erstellen einer lokalen Spiegel des Programmteils im externen Computer durch Abrufen einer Kopie des Programmteils gemäß der Referenz,
- Bearbeiten des Programmteils in dem externen Computer,
- Senden eines Befehls zum Durchführen einer Änderung in dem Roboterprogramm abhängig von der Bearbeitung an das Steuerungssystem, und
- Durchführen der Änderung unmittelbar in dem Hauptspeicher des Steuerungssystems und Aktualisieren der Spiegelung.

2. Verfahren nach Anspruch 1, wobei Informationen über Symbole und Datenobjekte zur Spiegelung abgerufen werden.

3. Verfahren nach Anspruch 1 oder 2, wobei die Spiegelung mit einer Programmlogik versehen ist, um semantische Informationen über das Roboterprogramm zu erstellen und zu deuten.

4. Verfahren nach einem der Ansprüche 1 - 3, wobei die Position des Programmzählers in dem Roboterprogramm abgerufen wird, woraufhin die Position des Programmzählers in der Spiegelung gezeigt wird.

5. Verfahren nach einem der Ansprüche 1 - 4, wobei eine Beschreibung darüber, wie die Änderung durchzuführen ist, an das Steuerungssystem gesendet wird.

6. Verfahren nach Anspruch 5, wobei die Beschreibung der Änderung den Unterschied zwischen dem bestehenden Programmcode und dem bearbeiteten Programmcode umfasst.

7. Verfahren nach einem der Ansprüche 1-6, wobei das Roboterprogramm in eine Reihe von verschiedenen Programmmodulen unterteilt wird, wobei eine Übersicht über die Programmmodule auf dem externen Computer gezeigt wird, wobei das zu bearbeitende Programmmodul in der Übersicht markiert ist und die Referenz erhalten wird.

8. Verfahren nach Anspruch 7, wobei zumindest ein Teil des markierten Programmmoduls auf dem externen Computer gezeigt wird, wodurch einem Benutzer die Möglichkeit gegeben wird, den gezeigten Text zu bearbeiten.

9. Verfahren nach einem der vorhergehenden Ansprüche, wobei das Robotersystem zwei Roboter aufweist, die mit dem externen Computer über ein Netzwerk verbunden sind.

10. Robotersystem, aufweisend einen Industrieroboter (1) mit einem Steuerungssystem (3), einschließend einen Hauptspeicher (5) mit mindestens einem Roboterprogramm und einem Prozessor, und einen externen Computer (4), der mit dem Steuerungssystem verbunden ist, wodurch das Robotersystem derart angeordnet ist, dass das Roboterprogramm in dem externen Computer bearbeitbar ist, **dadurch gekennzeichnet, dass** das Robotersystem Mittel (16) zum Erhalten einer Referenz durch den zu bearbeitenden Teil des Roboterprogramms und zum Erstellen einer lokalen Spiegelung in dem externen Computer des Teils, Mittel (14) zum Erzeugen und Senden eines Befehls an das Steuerungssystem in Bezug auf die Durchführung einer Änderung unmittelbar in dem Teil des Roboterprogramms in dem Hauptspeicher des Steuerungssystems, und Mittel zum Aktualisieren der Spiegelung aufweist.

11. Robotersystem nach Anspruch 10, **dadurch gekennzeichnet, dass** die einen Befehl erzeugenden Mittel (14) dazu geeignet sind, eine Beschreibung darüber zu erstellen, wie die Änderung durchzuführen ist, und dass der Änderungsbefehl die erstellte Beschreibung aufweist.

12. Robotersystem nach Anspruch 11, **dadurch gekennzeichnet, dass** die Beschreibung der Änderung den Unterschied zwischen dem bestehenden Programmcode und dem bearbeiteten Programmcode aufweist.

13. Robotersystem nach einem der Ansprüche 10-12, **dadurch gekennzeichnet, dass** es Mittel zum Herausfinden der Position des Programmzählers in dem Roboterprogramm und zum Zeigen des Programmzählers (20) in der Spiegelung aufweist.

14. Robotersystem nach einem der Ansprüche 10 - 13, **dadurch gekennzeichnet, dass** die lokale Spiegelung Informationen über Symbole und Datenobjekte aufweist.

15. Robotersystem nach Anspruch 14, **dadurch gekennzeichnet, dass** die Spiegelung eine Programmlogik zum Erstellen und Deuten von semantischen Informationen über das Roboterprogramm aufweist.

16. Robotersystem nach einem der Ansprüche 10-15, **dadurch gekennzeichnet, dass** das Roboterprogramm in eine Reihe von verschiedenen Programmmodulen unterteilt ist, und dass der Computer einen Explorer aufweist, der eine Übersicht über die Programmmodule zeigt und Mittel zum Markieren des zu bearbeitenden Programmmoduls in der Übersicht aufweist.

17. Robotersystem nach einem der Ansprüche 11 - 19, **dadurch gekennzeichnet, dass** es zwei Roboter aufweist, die mit dem externen Computer über ein Netzwerk verbunden sind.

18. Computerprogrammprodukt, das unmittelbar in den internen Speicher eines Computers geladen werden kann, aufweisend Softwarecodeteile, um den Roboter in die Lage zu versetzen, das Verfahren nach einem der Ansprüche 1 - 10 durchzuführen.

19. Computer programm produkt nach Anspruch 18, das zumindest teilweise über ein Netzwerk, wie das Internet, zur Verfügung gestellt wird.

20. Maschinenlesbares Medium, aufweisend ein Computerprogramm, aufweisend Befehle zum Beeinflussen eines Prozessors dahingehend, dass er das Verfahren nach einem der Ansprüche 1 - 10 ausführt.

21. Verwendung eines Robotersystems nach einem der Ansprüche 10 - 17 für eine Mal- und Zeichenanwendung.

## Revendications

1. Procédé pour éditer un programme informatique dans un robot industriel comprenant au moins un robot industriel avec un système de commande (3) incluant une mémoire principale (6) avec au moins un programme pour robot stocké dans celle-ci, le programme pour robot étant édité à partir d'un ordinateur externe qui est connecté au système de commande, **caractérisé en ce que** le procédé comprend les étapes suivantes :
- obtention d'une référence pour la partie du programme pour robot qui doit être éditée,
- création d'une réplique locale de ladite partie de programme dans l'ordinateur externe par extraction d'une copie de la partie de programme en fonction de la référence,
- édition de la partie de programme dans l'ordinateur externe,
- envoi d'un ordre au système de commande pour la mise en oeuvre d'une modification dans le programme pour robot en relation avec ladite édition, et
- mise en oeuvre de ladite modification directement dans la mémoire principale du système de commande et mise à jour de la réplique.

2. Procédé selon la revendication 1, dans lequel des informations sur des symboles et des objets fichiers de données sont extraits vers la réplique.

3. Procédé selon la revendication 1 ou la revendication 2, dans lequel la réplique est pourvue d'une logique de programme pour créer et interpréter des informations sémantiques concernant le programme pour robot.

4. Procédé selon l'une quelconque des revendications 1 à 3, dans lequel la position du compteur de programme dans le programme pour robot est extraite, après que la position du compteur de programme soit affichée dans la réplique.

5. Procédé selon l'une quelconque des revendications 1 à 4, dans lequel une description de la manière selon laquelle mettre en oeuvre la modification est envoyée au système de commande.

6. Procédé selon la revendication 5, dans lequel ladite description de modification comprend la différence entre le code de programme existant et le code de programme édité.

7. Procédé selon l'une quelconque des revendications 1 à 6, dans lequel ledit programme pour robot est divisé en un certain nombre de modules de programme différents, une vue d'ensemble desdits modules de programme étant affichée sur l'ordinateur externe, dans lequel le module de programme à éditer est repéré dans la vue d'ensemble et ladite référence est obtenue.

8. Procédé selon la revendication 7, dans lequel au moins une partie du module de programme repéré est affichée sur l'ordinateur externe, de telle sorte qu'un utilisateur ait la possibilité d'éditer le texte affiché.

9. Procédé selon l'une quelconque des revendications précédentes, dans lequel le système robot comprend deux robots qui sont connectés à l'ordinateur externe par l'intermédiaire d'un réseau.

10. Système robot comprenant un robot industriel (1) avec un système de commande (3), incluant compris une mémoire principale (5) avec au moins un programme pour robot et un processeur, et un ordinateur externe (4) connecté au système de commande, le système robot étant agencé de telle sorte que le programme pour robot est éditable dans l'ordinateur externe, **caractérisé en ce que** le système robot comprend des moyens (16) pour obtenir une référence pour la partie du programme qui doit être éditée et pour créer une réplique locale de ladite partie dans l'ordinateur externe, des moyens (14) pour générer et envoyer un ordre au système de commande en ce qui concerne la mise en oeuvre d'une modification directement dans ladite partie du programme pour robot dans la mémoire principale du système de commande, et des moyens pour mettre à jour la réplique.

11. Système robot selon la revendication 10, **caractérisé en ce que** lesdits moyens (14) générateur d'ordre sont adaptés pour générer une description de la manière selon laquelle la modification doit être mise en oeuvre et **en ce que** l'ordre de modification comprend la description produite.

12. Système robot selon la revendication 11, **caractérisé en ce que** ladite description de modification comprend la différence entre le code de programme existant et le code de programme édité.

13. Système robot selon l'une quelconque des revendications 10 à 12, **caractérisé en ce qu'**il comprend des moyens pour repérer la position du compteur de programme dans le programme pour robot et pour afficher le compteur de programme (20) dans la réplique.

14. Système robot selon l'une quelconque des revendications 10 à 13, **caractérisé en ce que** ladite réplique locale comprend des informations relatives à des symboles et des objets fichiers de données.

15. Système robot selon la revendication 14, **caractérisée en ce que** la réplique comprend une logique de programme pour créer et interpréter des informations sémantiques relatives au programme pour robot.

16. Système robot selon l'une quelconque des revendications 10 à 15, **caractérisé en ce que** ledit programme pour robot est divisé en un certain nombre de modules de programme différents et **en ce que** ledit ordinateur comprend un explorateur qui affiche une vue d'ensemble desdits modules de programme et comprend des moyens pour repérer, dans la vue d'ensemble, le module de programme qui doit être édité.

17. Système robot selon l'une quelconque des revendications 11 à 19, **caractérisé en ce qu'**il comprend deux robots qui sont connectés à l'ordinateur externe par l'intermédiaire d'un réseau.

18. Produit-programme informatique qui peut être chargé directement dans la mémoire interne d'un ordinateur, comprenant des parties de code de logiciel pour permettre au robot de mettre en oeuvre le procédé selon l'une quelconque des revendications 1 à 10.

19. Produit-programme informatique selon la revendication 18, disponible au moins en partie sur un réseau tel que l'Internet.

20. Support informatique lisible comprenant un programme informatique comprenant des instructions pour contrôler un processeur afin de mettre en oeuvre le procédé selon l'une quelconque des revendications 1 à 10.

21. Utilisation d'un système robot selon l'une quelconque des revendications 10 à 17 pour une application de peinture.
